**Europäisches Patentamt**

(19) **European Patent Office**

**Office européen des brevets**

(11) Publication number: **0 120 650**

**A2**

(12) # EUROPEAN PATENT APPLICATION

(21) Application number: **84301737.7**

(22) Date of filing: **14.03.84**

(51) Int. Cl.³: **B 65 G 47/88**
**B 65 G 47/82, B 65 G 47/08**

(30) Priority: **28.03.83 US 479751**

(43) Date of publication of application:
**03.10.84 Bulletin 84/40**

(84) Designated Contracting States:
**DE FR GB IT**

(71) Applicant: **R. A. JONES & CO. INC.**
**2701 Crescent Springs Road**
**Covington Kentucky 41017(US)**

(72) Inventor: **Weichhand, Robert J.**
**127 Parkway, Crestview Hills**
**Ft: Mitchell Kentucky 41017(US)**

(72) Inventor: **Moehlman, Raymond L.**
**3043 Ashley Drive Edgewood**
**Ft. Mitchell Kentucky 41017(US)**

(74) Representative: **Allen, Oliver John Richard et al,**
**Lloyd Wise, Tregear & Co. Norman House 105-109 Strand**
**London, WC2R 0AE(GB)**

(54) Apparatus for transferring articles into product buckets of a cartoner.

(57) This invention is directed to an apparatus for transferring packages into the product buckets of a cartoning machine which comprises an infeed conveyor for advancing the packages having a curved surface at its discharge end, and a transfer mechanism for moving the articles from the infeed conveyor to the deadplate. The transfer mechanism includes an endless support carrying transverse projections which move into the gap between contiguous packages to separate each package at the discharge end of the infeed conveyor from the adjacent upstream packages. The transverse projections form a compartment for each package which positively controls the movement of the packages from the infeed conveyor to the product buckets at a precise speed timed to the speed of the product buckets.

Croydon Printing Company Ltd.

**0120650**

TITLE:   APPARATUS FOR TRANSFERRING ARTICLES INTO PRODUCT
BUCKETS OF A CARTONER.

This invention relates to an article transfer mechanism, and more particularly, to a mechanism
for transferring elongated packages from an infeed
conveyor to the product buckets of a cartoner.

In a cartoner to which the present invention
is applicable, one or more elongated packages are
deposited in product buckets on an endless product
bucket conveyor.  The product bucket conveyor runs
parallel to a transport conveyor in which open,
tubular cartons are deposited.  The cartons are
aligned with the packages in the product buckets, and
at a loading section pusher heads move the packages
into the cartons.

The present invention is directed to an
apparatus for solving the problem of moving the
packages from a product infeed conveyor and placing
them into the product buckets, the problem being
particularly acute where the packages contain very
fragile cracker or cookie products encased in a
tubular wrapper with fins at each end.  The packages
must be handled gently and their movement must be
timed perfectly to the movement of the product buckets.  Slight variations in the diameter of the
packages must also be accommodated.  Preferably, the
apparatus should have the capability of ease of changeover to deposit different numbers of packages of product in the product buckets. One solution to the problem is depicted in United States Patent No. 4,178,120. That machine, while entirely satisfactory, involves complex mechanisms and is somewhat expensive.

In another prior art machine, packages are conveyed side-by-side in a transverse attitude to the direction of movement. A check and release mechanism intermittently releases groups of two, three or four packages to the product buckets while blocking the upstream group. This mechanism relies on gravity to convey the product to the product buckets, which of itself could be a speed limiting factor in the operation of the mechanism, and does not provide precise timing of the packages transferred with the movement of the product buckets. Timing of the movement of the packages can also be adversely affected in this device due to a buildup of dirt and wax from the paper packages on the support plate on which the packages move to the product buckets. Further, the repeated starting and checking of the packages by operation of the check and release mechanism imparts a repeated jarring to the packages with the consequent possibility of crumbling the fragile product.

Another approach for handling the transversely-oriented side-by-side packages employs an overhead star wheel and an underneath separator wheel to effect the transfer. The separator wheel has pins which swing between the continuous packages on the infeed conveyor to separate them from the upstream group of incoming packages. The overhead star wheel also has projections which are spaced apart to accommodate two, three or four packages between each pair of projections. In operation, the separator wheel moves packages into the space provided between the projections of the star wheel and when the star wheel space is filled, its continued rotation discharges the group of packages into a product bucket passing beneath.

A primary objective of the present invention has been to provide an improvement upon the prior devices described above and particularly to provide a less expensive device which provides greater control over the packages, more precise timing of the movement of the packages with respect to the product buckets and the ability to change over to different numbers of packages transferred to product buckets more simply than has been possible with the prior apparatus.

This objective of the invention is generally attained by providing an infeed conveyor having a surface, (preferably arcuate), at its discharge end over which the packages pass. Adjacent the arcuate surface is an endless support carrying transverse projections which in operation moves into the gap between contiguous packages created by the arcuate surface to separate each package from the contiguous upstream package and to form a compartment which positively controls the package and moves it from the infeed conveyor to the product buckets at a precise speed timed to the speed of the product buckets.

In one embodiment of the invention, the packages are deposited from the endless support directly into product buckets. In another embodiment of the invention, the packages are deposited from the endless support onto a slotted deadplate, and when the desired number of packages has been accumulated on the deadplate, the packages are swept off the deadplate by the alternately slotted, trailing wall of a product bucket passing through the deadplate.

By providing a quite simple gear transmission, the speed of the endless support can be changed with respect to the speed of the product buckets so as to deposit a different number of packages in the product buckets or on the deadplate.

In the preferred form of the invention, the endless support comprises a pair of chains having a generally linear run passing adjacent to the arcuate surface of the infeed conveyor. The chains carry either a series of spaced bars which slide between contiguous packages, or individual pockets having at least a trailing projection which moves into the gap between contiguous packages to pull the individual packages from the incoming supply and deposit them in product buckets or on the deadplate.

By altering the position of the spaced bars or pockets along the chains, and also the run of the chains adjacent to the surface, different shapes of packages may be accommodated and transferred from the infeed conveyor to the product buckets.

The invention will now be further described by way of example with reference to the accompanying drawings in which:

Figure 1 is a side view in partial cross section of a preferred embodiment of the article transfer mechanism of this invention adapted for use with elongated tubular-shaped articles;

Figure 2 is a cross-sectional view taken generally along line 2-2 of Figure 1;

Figure 3 is a side view in partial cross section of an alternate embodiment of the article transfer mechanism herein;

Figure 4 is a side view in partial cross section of the embodiment of this invention shown in Figure 1 adapted for use with rectangular-shaped articles.

Figure 5 is a side view in partial cross section of the embodiment of Figure 1 in which the packages are placed directly in product buckets.

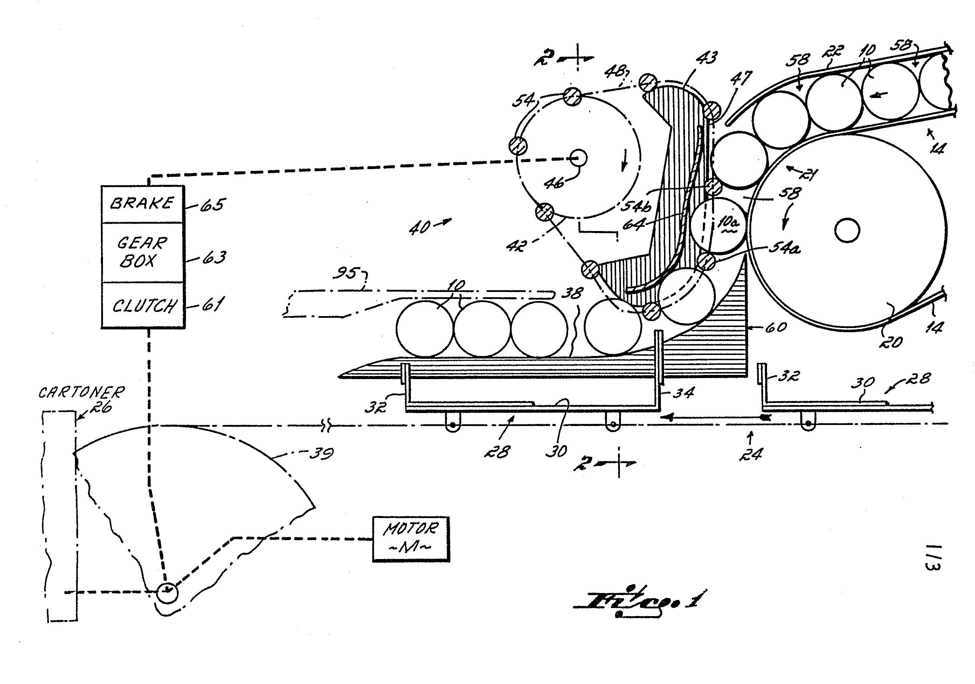

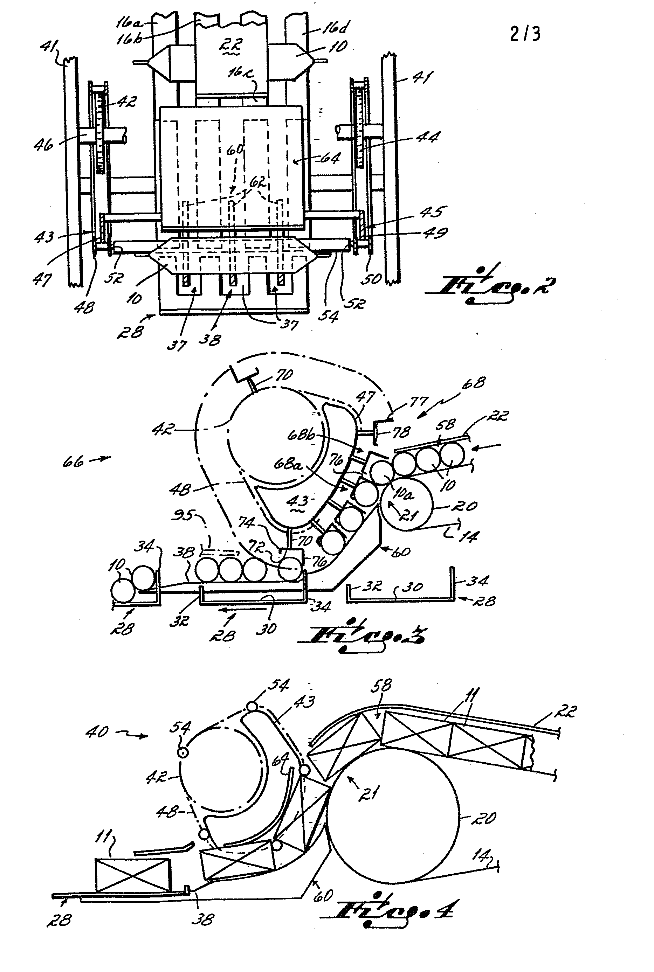

The general organization of one embodiment of the apparatus of this invention is illustrated in Figures 1 and 2. Elongated tubular-shaped packages or articles 10 are introduced from an upstream conveyor (not shown) to an infeed conveyor 14. The infeed conveyor 14 comprises four endless belts 16a-d wrapped about a rear drum (non shown) and a forward drum 20 which forms a curved, discharge end 21 of the infeed conveyor 14. Guides 22 are mounted on either side of the infeed conveyor 14 to maintain the articles 10 in side-to-side relation so that adjacent articles 10 contact one another along their entire length. To the extent that some bumping between adjacent articles 10 occurs along the downstream conveyor or infeed conveyor 14, it has been found that orienting articles 10 in side-to-side relation reduces damage to the contents of the articles 10, particularly food items such as crackers or cookies.

A product conveyor 24 is provided of the kind typically used in a standard cartoning machine which is shown schematically in Figure 1 and labeled with the reference numeral 26. A plurality of product buckets 28 are spaced along the product conveyor 24, in the embodiment shown in Figure 1, and each is formed with a base portion 30 disposed between and mounted to an upwardly extending leading side 32 and a longer, trailing side 34. The product buckets 28 are movable beneath a deadplate 38 formed with slots or channels 37 (Fig. 2) through which the alternately slotted, trailing side 34 of the product buckets 28 upwardly extends. The articles 10 in this embodiment are transferred individually by the transfer mechanism of this invention from the infeed conveyor 14 to the deadplate 38. The trailing side 34 of the product buckets 28 engages a predetermined number of articles 10 placed on the deadplate 38 and sweeps them into the product buckets 28.

Referring now to Figures 1 and 2, a preferred embodiment of the transfer mechanism 40 of this invention is shown. Generally, the transfer mechanism 40 is adapted to engage each article 10 at the curved surface of the discharge end 21 of infeed conveyor 14 and positively transfer them to the deadplate 38 for removal into a product bucket 28. It is among the primary advantages of the transfer mechanism 40 that jostling or bumping of the articles 10 is minimized both at the point of transfer of the articles 10 from the infeed conveyor 14 to the dead plate 38 and also along the upstream conveyor and infeed conveyor 14.

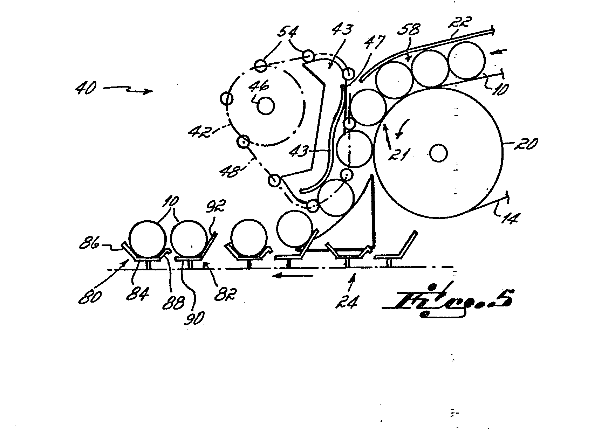

The operation and configuration of the transfer mechanism 40 shown in Figures 1 and 2 is adapted for handling elongated, tubular-shaped articles 10. The transfer mechanism 40 may be modified as shown in Figure 4, and discussed below, to accommodate articles of other shapes such as rectangular, square and the like. The transfer mechanism 40 comprises a pair of spaced sprockets 42 and 44 mounted to a drive shaft 46 journalled into a housing 41 for rotation in a clockwise direction as illustrated in Figure 1. A pair of fixed cams 43, 45 are disposed in alignment with the sprockets 42, 44, respectively, and are formed with outwardly-extending arcuate surfaces 47, 49. The cams 43, 45 are mounted relative to the infeed conveyor 14 such that their arcuate surfaces 47, 49 are disposed adjacent the discharge end 21.

An endless first chain 48 extends between sprocket 42 and cam 43, and an endless second chain 50 extends between sprocket 44 and cam 45. The sprockets 42, 44 are adapted to drive the chains 48, 50 for clockwise movement about the arcuate surfaces 47, 49 of cams 43, 45. The chains 48, 50 are each provided with inwardly-extending mounting pins 52 which are spaced along their length. A plurality of rods 54 formed of metal or rigid plastic extend between the chains 48, 50 at regular intervals and are mounted thereto by the mounting pins 52.

The arcuate surfaces 47, 49 of cams 43, 45 are shaped so as to guide the rods 54 extending between chains 48, 50 in an essentially linear run or path adjacent the discharge end 21 of infeed conveyor 14 as the sprockets 42, 44 are rotated. As each article 10 reaches the discharge end 21 of infeed conveyor 14, a rod 54 is guided by cams 43, 45 into the gap 58 between the article 10 closest to the discharge end 21 and the contiguous article 10 immediately upstream along infeed conveyor 14. Continued rotation of the sprockets 42, 44 advances the first rod 54 toward the deadplate 38 and another rod 54 is moved into the gap 58 between the next contiguous article 10. Each article 10 is thus captured between two rods, 54, as for example article 10a between rods 54a and 54b, which form a compartment for positively advancing the article 10a to the deadplate 38 in timed relation to the movement of the product buckets 28.

In order to prevent movement of the articles 10 from between the rods 54 as the articles 10 are transferred from the infeed conveyor 14 to the deadplate 38, guide means are provided. The guide means include a ramp 60 formed of three arcuate brackets 62 which extend from the discharge end 21 of infeed conveyor 14 downwardly to the deadplate 38. In addition, to prevent movement of the articles 10 outwardly toward the transfer mechanism 40, a number of arcuate guide brackets 64 are disposed between the cams 43, 45 and extend from the upper end of infeed conveyor 14 downwardly toward the deadplate 38. As shown in Figure 1, the rods 54 thus pass between the ramp 60 and guide brackets 64 from the point of contact with the articles 10 at the discharge end 21 of infeed conveyor 14 to the point of release of the articles 10 at the deadplate 38. The space or distance between ramp 60 and guide brackets 64 is somewhat greater than the diameter of article 10 so that the articles 10 are transferred without binding or interference.

In order to assure smooth operation of the transfer mechanism 40 and eliminate or at least minimize damage to the contents of articles 10, the size and spacing of the rods 54 along the first and second chains 48, 50 must be adjusted according to the size of the articles 10 to be handled. In viewing Figure 1, it can be appreciated that the rods 54 must be spaced along link chains 48, 50 and must be of an appropriate diameter so that an individual rod 54 can be rotated into the gap 58 between contiguous articles 10 without engaging the sides of either of the articles 10.

Additionally, the curvature or arc of the forward drum 20 forming the curved surface of the discharge end 21 of infeed conveyor 14 should be sufficient to tend to separate contiguous articles 10 to increase the size of the gap 58 therebetween. This is particularly important for rectangular or square articles as discussed in connection with Figure 4 below. Therefore, it is important to the operation of the transfer mechanism 40 herein to achieve the appropriate combination of the curvature of the discharge end 21 of infeed conveyor 14, spacing of the rods 54 along the link chains 48, 50 and diameter of the rods 54.

Assuming the articles 10 to be transferred from the infeed conveyor 14 have a diameter of approximately two and one-quarter inches, it has been found that the transfer mechanism 40 operates efficiently with cams 43, 45 having arcuate surfaces 47, 49, respectively, formed in a shape such as shown in Figure 1. Preferably, rods 54 of approximately three-quarters inch in diameter are spaced about three inches apart along the link chains 48, 50 from center to center. In addition, a forward drum 20 of approximately eight inches in diameter is used to form the discharge end 21 of the infeed conveyor 14. It should be understood that other configurations of the arcuate surfaces 47, 49 of cams 43, 45 may also provide acceptable performance of transfer mechanism 40. In addition, the diameter and spacing of rods 54 can be changed to accommodate articles 10 of different shape and/or diameter as is apparent in Figure 4. Further, the diameter of forward drum 20 may be altered to obtain a steeper or a more gradual angle of descent of the articles 10 from the infeed conveyor 14 to the point of engagement with rods 54.

Rotation of the transfer mechanism 40 is timed with the movement of the product buckets 28 along the product bucket conveyor 24 so that a predetermined number of articles 10 are deposited on the deadplate 38 for placement into the incoming product buckets 24 moving beneath. Referring to Figure 1, the product bucket conveyor 24 is driven by a drum 39 rotated by the motor M of a standard cartoning machine 26. The motor M is operable to continuously move the product buckets 28 mounted to the product bucket conveyor 24 beneath the deadplate 38 and to the cartoning machine 26. The drive shaft 46 of the transfer mechanism 40 is mechanically connected to the motor M by a clutch 61, gear box 63 and brake 65, each of which is known in the art.

To begin operation of the transfer mechanism 40 and product bucket conveyor 24, the brake 65 and clutch 61 are utilized so that the product buckets 28 are positioned properly beneath the deadplate 38 as the transfer mechanism 40 begins to move articles 10 downwardly from the infeed conveyor 14. In the embodiment of the invention shown in Figure 1, the gear box 63 is adjusted to control the speed of rotation of drive shaft 46 so that four articles 10 are placed on deadplate 38 before the trailing side 34 of a product bucket 28 is moved into a position along deadplate 38 to engage the articles 10. The trailing side 34 of the product buckets 28 contacts the last of four articles 10 to be deposited on the deadplate 38 and sweeps it and the three preceding articles 10 along the deadplate 38 and into the product bucket 28 at the end of the deadplate 38. To maintain the articles 10 in an appropriate position along deadplate 38 for subsequent movement into a product bucket 28, a hold-down guide 95 is disposed generally parallel to and above the deadplate 38 and lightly engages the articles 10.  The hold down guide 95 is particularly useful at high operational speeds where adjacent articles 10 could roll off of the dead plate 38 if not for the frictional engagement of guide 95.

One advantage of this invention is that the gear box 63 may be adjusted to alter the speed of rotation of drive shaft 46 of transfer mechanism 40. For example, rotation of the drive shaft 46 may be slowed so that only three articles 10 are transferred from the infeed conveyor 14 to the deadplate 38 in the time required for a product bucket 28 to advance to the pick-up position beneath deadplate 38.  The speed of rotation of shaft 46, relative to the speed of the product bucket conveyor 24, may thus be controlled as desired depending on number of articles 10 to be deposited into a given carton in the cartoning machine.

Referring now to Figure 3, an alternate embodiment of the transfer mechanism of this invention is shown and labeled with the reference numeral 66. Elements of transfer mechanism 66 common to transfer mechanism 40 described above are given the same reference numerals in Figure 3.  The primary modification provided by transfer mechanism 66 is the replacement of rods 54 with pockets 68.  The pockets 68 extend between chains 48, 50 mounted to the cams 43, 45, and attach to the outer edge of chains 48, 50 by means of pins 70. The pockets 68 are formed with a base portion 72 disposed between and connected to an upwardly-extending leading side section 74 and a longer, trailing side section 76.

As shown in Figure 3, the pockets 68 are rotated by sprockets 42, 44 and guided by cams 43, 45 to a point at the discharge end 21 of infeed conveyor 14. As an article 10a is discharged from the infeed conveyor 14, it contacts the trailing side section 76 of a bucket 68a which has advanced part way downwardly relative to the discharge end 21 of infeed conveyor 14 toward the deadplate 38. The next pocket 68b advances to a position where it overlies the article 10a so that the article 10a is disposed in the compartment formed between the leading and trailing side sections 74, 76 of pocket 68b. The compartment provided by each pocket 68 operates in the same manner as the compartments formed between adjacent rods 54 of transfer mechanism 40 to achieve an accurately timed, positive transfer of the articles 20 from infeed conveyor 14.

An insert 78 may be mounted to the base portion 72 of each pocket 68 so that the articles 10 are guided between the pocket 68 and ramp 60. Thus, the base portion 72 of the pocket 68 eliminates the need for the guide bracket 64 provided in the transfer mechanism 40 of Figure 1. If desired, a tip 77 may be affixed to the lower, outer edge of the trailing side section 76 of each pocket 68 to assist in positioning such trailing side section 76 into the gap 58 of contiguous articles 10.

Referring now to Figure 4, a modified version of the transfer mechanism 40 is shown for use in connection with rectangular articles 11. The components of transfer mechanism 40 in this embodiment are essentially identical to that shown in Figure 1, except that the shape of the cams 43, 45 have been modified to accommodate the length of the rectangular articles 11. In addition, the spacing between adjacent rods 54 has been increased an amount equal to a distance somewhat greater than the length of rectangular articles 11. As is apparent from the upstream portion of infeed conveyor 14 shown, rectangular articles 11 move toward the end of infeed conveyor 14 in an abutting side-to-side relation with no gap or space therebetween. Therefore, for rectangular articles 11, it is important to provide a forward drum 20 which forms a curved surface at the discharge end 21 of the infeed conveyor 14 such that the ends of the rectangular articles 11 separate from one another as adjacent articles 11 move from the upstream portion of infeed conveyor 14 around its curved discharge end 21.

Another embodiment of the invention herein is shown in Figure 5, in which the transfer mechanism 40 is adapted to release articles 10 directly into product bucket pairs moving along a product bucket conveyor 24 which consists of a forward bucket 80 and a trailing bucket 82. This embodiment eliminates the deadplate 38 shown Figure 1, and provides for the direct placement of a predetermined number of articles 10 into the product buckets 80, 82. The number of articles 10 deposited in the buckets 80, 82 can be varied by adjusting the speed of rotation of the transfer mechanism 40 using gear box 63 as discussed above.

The product bucket 80 comprises a base 84, an angled front section 86 and an angled rear section 88. The trailing bucket 82 includes a base 90 and an angled back section 92. The buckets 80, 82 are disposed along the product conveyor 24 so that the rear section 88 of the forward bucket 80 forms, in effect, the front portion of the trailing bucket 82.
In the embodiment shown in Figure 5, the transfer
mechanism 40 releases an article 10 into the forward
bucket 80, and then a second article 10 is released
into the trailing bucket 82 where it is held in place
by the rear section 88 of the forward bucket 80 and
the back section 92 of the trailing bucket.  Although
the buckets 80, 82 of Figure 5 are sized to each
receive a single article 10, they may be enlarged to
accommodate additional articles 10.

CLAIMS:

1.      Apparatus for transferring elongated articles into product buckets comprising: an infeed conveyor having a discharge end for delivering packages in contiguous, side-by-side relation; a surface at the discharge end of the conveyor over which the articles pass; an endless support having a run passing adjacent the surface, the support having a plurality of transverse projections spaced apart by approximately the thickness of the articles; means for driving the endless support past the surface, each of the projections projecting between contiguous articles to separate the articles and to positively carry each article to a position for delivery to the product buckets.

2.      Apparatus as claimed in Claim 1 in which the supports and transverse projections comprise: two spaced endless chains, a plurality of rods mounted between the chains and spaced around the chains, the rods each having a diameter substantially smaller than the thickness of the packages to enable the rods to move into engagement with two contiguous packages and separate them without damage to the contents of the packages.

3.      Apparatus as claimed in Claim 2 including a pair of cams each formed with an arcuate surface, the endless chains being movable along one of the cams for passing adjacent the said surface at the discharge end.

4.      Apparatus as claimed in any of the preceding claims including a deadplate overlying the product buckets, the support and projections being adapted to deposit the articles onto said deadplate for subsequent placement into the product buckets.

5. Apparatus as claimed in any of the preceding claims comprising a hold-down guide disposed above said deadplate for engaging said articles on said deadplate to control the movement thereof in preparation for placement into said product buckets.

6. Apparatus as claimed in any of the preceding claims in which the discharge end of the infeed conveyor is arcuate.

7. Apparatus as claimed in any of the preceding claims wherein the product buckets are linearly movable beneath the support, wherein means are provided for changing the speed of movement of the support with respect to the linear speed of said product bankers.

8. Apparatus as claimed in Claim 7 wherein the speed changing means is an adjustable gear box.

9. Apparatus as claimed in Claim 1 in which the support and transverse projections comprise: two spaced endless chains and a plurality of channel shaped elements mounted side-by-side around the chains, the channel shaped elements forming pockets each having a width approximately equal to the thickness of an article to engage the individual contiguous articles, separate them and deliver them to product buckets.

10. Apparatus as claimed in Claim 9 wherein the elongated pockets have a base portion disposed between and attaching to an upstanding, leading side section and a longer trailing side section.

11.     Apparatus as claimed in any of the preceding claims including means comprising a ramp formed of a plurality of arcuate brackets extending from the said discharge end of the infeed conveyor downwardly toward the product buckets, and a plurality of upper guide brackets spaced from said arcuate brackets extending outwardly relative to the discharge end of the infeed conveyor.

12.     Apparatus as claimed in Claim 11 wherein the space between the ramp and the upper guide brackets is equal to a distance somewhat greater than the diameter or largest of the length and width dimensions of the articles.

*Fig. 1*

0120650

0120650

2/3

Fig. 2

Fig. 3

Fig. 4

0120650

3/3

Fig. 5